# EUROPEAN PATENT APPLICATION

(11) **EP 0 706 754 A1**
(43) Date of publication of application: **17.04.1996**
(21) Application number: 95202546.8
(22) Date of filing: 21.09.1995
(51) Int. Cl.: A01J 25/00, A01J 25/11

(54) **Mould shutting device for pasta, filata cheese such as caciocavallo and the like**

(30) Priority: 12.10.1994 IT TO940813
(71) Applicant: CMT Costruzioni Meccaniche e Tecnologia S.p.A., I-12010 Peveragno (CN) (IT)
(72) Inventor: Tomatis, Stefano, I-12010 Peveragno (CN) (IT)
(74) Representative: Spandonari, Carlo, Dr. Ing.

(57) **Abstract**

The mould (24) is fed with pasta filata through a filling passage (11, 15, 18). Two overlapping strips (32, 34) are slidably received within a guide (30) transversal to said filling passage, and each has an aperture (36, 38) alignable with the passage. The strips can slide slowly in opposite directions in the guide, under the action of actuator means (40-62), so that their apertures are gradually brought out of alignment until the passage is shut.

## Description

This invention is concerned with a shutting device for moulds used in moulding pasta filata cheese such as caciocavallo, scamorza, provolone and the like.

In the conventional moulding of caciocavallo, a mass of pasta filata is wound up as a string ball, with a smooth outside film formed by parallel fibers. Such a configuration will retain moisture within the cheese mass, by hindering draining and evaporation of internal moisture.

In mechanical moulding, moulding machines have been proposed where the pasta filata is pushed forward by feeding augers to bloom through a neck into a cylindrical or conical mould, whereby its fibers are stretched and the above-mentioned smooth film is formed. When the mould is filled with the desired amount of pasta filata, the pasta flow is cut off by a slide moving across the neck. However, this operation will shear the pasta filata fibers neatly in the mould inlet area, and a spot will result on the external surface where the fibers abut with their open ends to the surface of the caciocavallo, thereby allowing moisture to anomalously drain and evaporate. A characteristic scar, in the shape of a yellowish blot, will then show in that point, which scar makes the product inferior in quality to the same product as produced by hand.

IT-A-TO92A000320 proposes to solve the problem by a vane-shutter device, in which four sliding triangular plates gradually throttle a square opening. Such a solution, while reducing the surface of the scar, still is not quite satisfactory.

This invention now aims at providing a mould shutting device for pasta filata cheese such as caciocavallo, scamorza, provolone and the like, which is more effective than the known device, and which, in particular, reduces the size and visibility of the scar.

Another object is to provide such a device with a mechanical structure which is simpler and cheaper than the prior device, and with a shorter processing time.

The invention achieves the above and objects with a shutting device for caciocavallo moulds, wherein the mould is fed with pasta filata through a filling passage, characterized in that it comprises two strips slidably received within a guide transversal to said filling passage, and each having an aperture alignable with the passage, and actuator means for sliding such strips in opposite directions in the guide until the passage is shut.

The invention will now be described in more detail with reference to a preferred embodiment, shown in the attached drawings, which are given by way of illustrative and nonlimiting example, and wherein:
Fig. 1 is a partial view in vertical cross-section of a caciocavallo mould shutting device according to a preferred embodiment of the invention, in its open position;
Fig. 2 is a view in cross-section made on line II of Fig. 1;
Fig. 3 is an exploded, prospective view of a portion of the device of Fig. 1; and
Fig. 4 is a diagrammatical view of an actuator mechanism for the shutting device of Figs. 1 to 3.

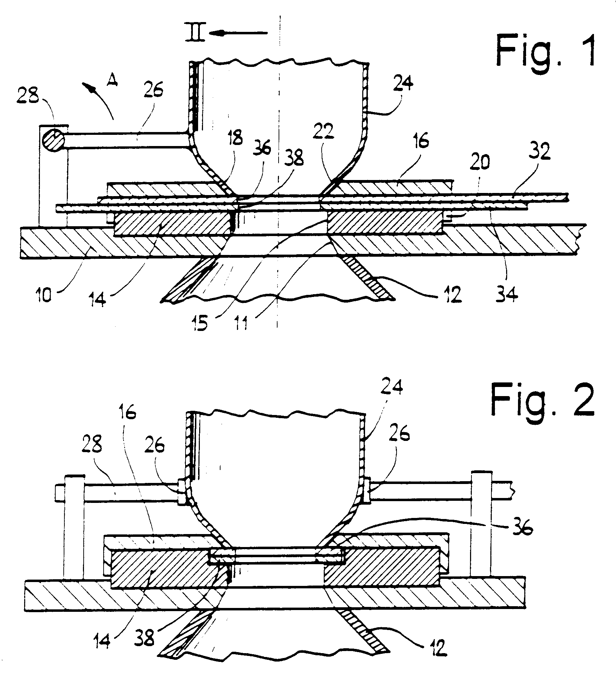

With reference to Figs. 1 to 3, a table 10 of a conventional caciocavallo moulding machine has a passage 11 to which a feeding tube 12 is adapted to feed pasta filata supplied by an auger conveyor (not shown), as known per se. According to the invention, a disk-shaped plate 14, of a synthetic, low-friction material such as polytetrafluoroethylene, is supported on table 10. Plate 14 has a bore 15 in alignment with passage 11. A metal disk 16, having a flared bore 18 in alignment with bore 15, rests upon plate 14. Disk 16 is retained within a peripheral ledge 20 and is fastened with clamps not shown. A mouth 22 of a bell-shaped mould 24 for caciocavallo-moulding is received within flared bore 18. Mould 24 is held on arms 26 which are welded to the mould and pivoted in 28, and which can be driven by conventional means (not shown) to tip the mould from the position shown to a capsized position for discharging the mould, as hinted by arrow A.

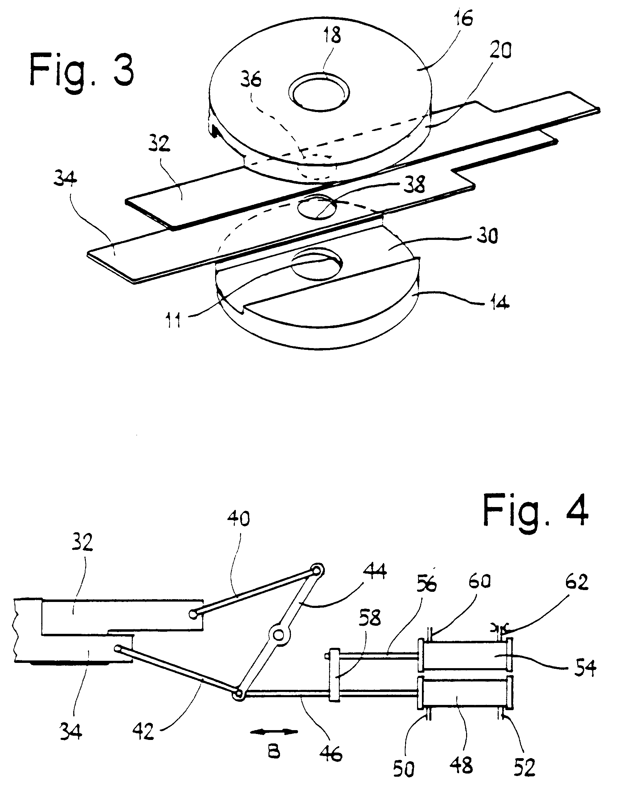

Plate 14 further has a groove 30 (Fig. 3) in its upper side, to act as a guide for two elongated, overlapping strips 32 and 34, provided with bores 36 and 38, which are normally aligned to each other and to bores 11, 15 and 18, as shown on Fig. 1, so that a filling passage is formed for mould 24. Both strips 32 and 34 can be driven by actuator means (which are not shown on Figs. 1 to 3, and which are described below with reference to Fig. 4), so that the strips are slid in opposite directions in guide 30 to shift bores 32 and 34 with respect to each other, symmetrically to the filling passage, so that the circular passage becomes oval and is reduced in cross-section down to complete shutting.

With reference to Fig. 4, the ends of sliding strips 32 and 34 are connected through respective rods 40, 42 to the opposite ends of a yoke 44 which is pivoted on table 10. One end of yoke 44 is further hinged to a shaft of a reversible air-cylinder 48, whose driving inlets 50, 52 can be driven from a source of compressed air (not shown) to control movement of shaft 46 in either direction shown by arrow B, respectively.

A braking cylinder 54 is preferably associated to air-cylinder 48. A piston 56, made integral with shaft 46 of the air cylinder by means of a clamp 58, is slidable in braking cylinder 54. One end of braking cylinder 54 is open to atmosphere through 60, while the other end communicates with the atmosphere through a throttle 62 adapted to brake the stroke of piston 56, so that shaft 46, which is integral with it, as well as yoke 44 and consequently also sliding strips 32 and 34, have a slow movement in the shutting direction, and a free, quick movement in the opening direction.

When moulding caciocavallo, the pasta filata being fed from underneath moves through bore 15 and bores 36 and 38, which are aligned at this time, and then through passage 18, to bloom upwardly in bell-shaped mould 24 up to a predetermined level, which can be set with well known metering techniques, such as by photocell sensors, weight sensors, and the like. When a desired amount of pasta filata has been loaded, air cylinder 48 is driven to slowly move strips 32 and 34 in opposite directions. The passage formed by the overlapping and aligned bores 36 and 38 is thereby gradually throttled, and its shape goes from circular to an increasingly elongated oval. Due to the slow movement, the pasta filata fibers are not sheared abruptly, but rather they are gradually stretched, and the actual cutting then takes place only along a short line, by a shearing action of the opposite edges of bores 36 and 38. The resulting scar is therefore barely perceptible, and does not extend to a roundish area, but rather takes the shape of a thin segment.

As soon as the shearing is completed, arms 26 swing by 180° in the direction of arrow A to lift mould 24 from its seat in disc 16 and tip it up to pour out the moulded caciocavallo, which will then be processed in subsequent steps of hardening, brining, etc., as known in the art. The empty mould is then moved back to its seat for the next filling. Alternatively, the device could comprise two moulds for alternating filling, say by arranging another mould held by an arm pivoting on the opposite side from arms 26 and driven in alternate strokes with the former.

While the throttling movement of strips 32 and 34 must be slow, in order to allow the highly viscous pasta filata to stretch without its fibers being immediately sheared, the backward movement of the strips to their passage opening positions takes place quickly, with the advantage that the processing cycle is shortened. This advantage is even greater if two bell-shaped moulds are used, as mentioned above.

Obviously, changes and modifications can be made to the preferred embodiment described above. For instance, bores 36 and 38 in strips 32 and 34 could have a non-circular, say oval, shape. The driving yoke, rather than being driven by an air cylinder, could be driven by a hydraulic or electromechanical actuator, or, alternatively, the yoke itself could be replaced by a different, though equivalent, mechanism. Instead of discharging the mould by tipping, two or more moulds could be arranged on slides, and be brought into alignment with the throttlable feeding passage in succession. The above and other changes should be regarded as comprised in the scope of the inventive idea.

## Claims

1. A shutting device for caciocavallo moulds, wherein the mould is fed with pasta filata through a filling passage (11, 15, 18), characterized in that it comprises two strips (32, 34) slidably received within a guide (30) transversal to said filling passage, and each having an aperture (36, 38) alignable with the passage, and actuator means (40-62) for sliding said strips in opposite directions in the guide until the passage is shut.

2. The mould shutting device of claim 1, characterized in that the apertures (36, 38) in said strips are circular bores.

3. The mould shutting device of claim 1 or 2, characterized in that said filling passage (11, 15, 18) comprises a flared bore (18) in a plate (16) overlapping said strips, and acting as a seat for the filling mouth (22) of the mould (24).

4. The mould shutting device of one of claims 1 to 3, characterized in that said actuator means (40-62) are adapted to slide said strips (32, 34) at a first, slower speed during shifting of said aperture to shut the passage, and at a second, higher speed during re-alignment of the apertures to re-open the passage.

5. The mould shutting device of one of claims 1 to 4, characterized in that said actuator means (40-62) comprise a reversible, fluid-operated cylinder (48) having a shaft (46) driving a yoke (44) which is pivoted to a fixed point and is hinged to the respective slidable strips (32, 34) at its opposite ends.

6. The mould shutting device of claims 4 and 5, characterized in that said fluid-operated cylinder is an air cylinder (48).

7. The mould shutting device of claim 5, characterized in that the shaft of said fluid-operated cylinder is integral with a piston (56) slidable in a cylinder (54) having one end (60) freely communicating with the atmosphere and its opposite end (62) communicating with the atmosphere through a throttle.
